# EUROPÄISCHE PATENTSCHRIFT

(11) **EP 3 126 205 B1**
(45) Veröffentlichungstag und Bekanntmachung des Hinweises auf die Patenterteilung: **04.05.2022**
(21) Anmeldenummer: 15715127.5
(22) Anmeldetag: 17.03.2015
(51) Int. Cl.: B61D 29/00, B61D 19/02

(54) **BELEUCHTUNG VON FAHRZEUGTÜREN**
ILLUMINATION OF VEHICLE DOORS
ÉCLAIRAGE DE PORTES DE VÉHICULES

(30) Priorität: 31.03.2014 AT 500492014
(43) Veröffentlichungstag der Anmeldung: 08.02.2017
(73) Patentinhaber: Knorr-Bremse GmbH, 2340 Mödling (AT)
(72) Erfinder: HÖRLENDSBERGER, Christian, A-3340 Waidhofen/Ybbs (AT)
(74) Vertreter: Patentanwälte Barger, Piso & Partner
(86) Internationale Anmeldenummer: PCT/AT2015/050067
(87) Internationale Veröffentlichungsnummer: WO 2015/149095

(56) Entgegenhaltungen:
- EP-A1- 1 533 205
- DE-A1-102010 004 116
- DE-A1-102010 019 764
- JP-A- 2007 099 041
- JP-A- 2013 116 735
- US-A- 5 142 823

## Beschreibung

Die Erfindung betrifft eine Schwenkschiebetür eines Schienenfahrzeugs, mit einem Türrahmen bzw. Portalrahmen, mit zumindest einem Türblatt und mit zumindest einem Leuchtmittel im Türbereich, entsprechend dem Oberbegriff des Anspruches 1.

Aus der DE 10 2010 004 116 A1 ist es bekannt, eine Warnvorrichtung, die beim Schließen einer Durchgangstür aktiviert wird, im Boden eines Fahrzeuges im Bereich der Tür vorzusehen und ausschließlich beim Schließen der Tür passend zu aktivieren, wobei durch das dann ausgestrahlte Licht ein Benutzer auf die sich schließende Tür aufmerksam gemacht wird.

Aus der JP 2007-99041 A ist es bekannt, im Türbereich eines Fahrzeuges den Benutzer auf die nach oben vorstehende Führungsschiene der Schiebetür hinzuweisen, indem in dieser Schiene Leuchtmittel vorgesehen sind, die im Bereich von Öffnungen in der Schiene angeordnet sind und wobei diese Öffnungen durch durchsichtiges oder durchscheinendes Material geschlossen sind, sodass ein Benutzer die Stolpergefahr erkennt.

Bei modernen Fahrzeugen, insbesondere Personenwagons von Eisenbahnen, Schnellbahnen oder U-Bahnen, bemüht man sich aus optischen Gründen und aus praktischen Gründen, eine möglichst glatt durchgehende, auch optisch einheitliche äußere Oberfläche der Seitenwände zu erzielen. Dies führt dazu, dass beim Einfahren des Zuges in die Station die Türen nicht ohne Weiteres erkenntlich sind und daher einerseits von den Wartenden nicht zum Ausstieg freigegeben werden, andererseits ein gewisser Suchaufwand von ihnen betrieben werden muss, um festzustellen, wo sich die Türen befinden. Dazu kommt noch, dass trotz der in den letzten Jahren immer besser gewordenen Bahnsteigbeleuchtung der Bereich des Einstiegs in den Wagon selbst, insbesondere bei Schwenkschiebetüren, relativ schlecht beleuchtet ist, da sowohl die Leuchtmittel vom Bahnsteig her, als auch die Leuchtmittel vom Zuginneren her, diesen Bereich schon aus geometrischen Gründen nur schlecht erfassen können. Dazu kommt noch, dass die Personen, die den Einstieg benutzen, das zumeist schräg von oben kommende Licht aus dem Wagon bzw. vom Bahnsteig vom Erreichen des Bodenbereichs abhalten, zu Deutsch sie gehen über ihren eigenen Schatten.

Die US 5,142,823 A, entsprechend der EP 0 400 188 A1 der Anmelderin, zeigt in Fig. 3 eine derartige Situation.

Im Stand der Technik findet man dazu die umfangreiche WO 2013/006848, die eigentlich ein Warnsystem betrifft, das das Bewegen der Türe anzeigt, und dementsprechend aufwändige Sensoren, Steuerungen und ähnliches benötigt. Die optischen Teile des Warnsystems sind dabei naturgemäß auf den Türblättern montiert und leuchten dem Passagier während des Öffnens der Tür ins Gesicht, um danach zu erlöschen. Dies trägt nicht nur nichts zur Sicherheit bei, sondern blendet die Passagiere, die sodann umso mehr im Finsteren tappen. Dazu kommt, dass diese Anordnung der Leuchtmittel eine komplexe Zufuhr der Energie erfordert, und dass diese Vorrichtung in bestehende Türblätter nur nach einer umständlichen und kostspieligen Vorbereitung integrierbar ist.

Die EP 1 533 205 betrifft ebenfalls ein Sicherheitssystem und sieht vor, im Türbereich am Fußboden eine Vielzahl von Lichtern zu montieren, die den Durchgangsbereich anzeigen. Gerade ältere Personen, die nach dem Spalt zwischen Fußboden und Bahnsteig Ausschau haltem, werden dadurch geblendet. Der Einbau im Boden ist auch bei Verwendug von vorbereiteten Leuchtleisten aufwändig; die Leuchten selbst sind härtesten Bedingungen und der größtmöglichen Verschmutzung ausgesetzt.

Aus der JP 2007/230380 ist es bekannt, den Handlauf eines Türgriffes an einer Fahrzeugtür mit einem Leuchtmittel zu versehen, um das Publikum auf seine Existenz aufmerksam zu machen. Ob insbesondere ältere Personen Einen blinkenden oder auch nur leuchtenden Teil anfassen und sich daran festhalten, oder ob sie dies als Warnhinweis ansehen, dem Ding nicht in die Nähe zu kommen, ist eine nich zu beantwortende Frage. Die Vorrichtung selbst ist an mechanisch problematischer Stelle angeordnet (anstoßende Passagiere und Gepäckstücke, Schmutz, etc.), da darüber hinaus bei den meisten Türen die Verengung des freien Querschnittes möglichst vermieden wird, ist die Idee nicht in die Praxis umsetzbar. Es besteht somit ein Bedarf an einer Beleuchtung dieser Übergänge und Eingänge, bei dem die Leuchtmittel insbesondere nicht der Abschattung unterliegen, aber auch möglichst nich blenden, bei dem sie über die Außenumrisse des Fahrzeugs nicht vorstehen und die glatte Außenwand nicht unterbrechen, wobei sie das Lichtraumprofil, den freien Ouerschnitt der geöffneten Tür nicht verkleinern und möglichst vandalismussicher und beschädigungssicher untergebracht sein sollen. Es ist die Aufgabe der Erfindung, eine derartige Beleuchtung anzugeben.

Die Erfindung stellt mit einem Türrahmen (5) bzw. Portalrahmen, mit zumindest einem Türblatt (3) und mit zumindest einem Leuchtmittel (4) im Türbereich, entsprechend den Merkmalen des Ansruches 1 zur Verfügung.

Damit wird erreicht, dass die Leuchtmittel vor Vandalismus, Verschmutzung und ungewollter Beschädigung weitestgehend geschützt sind, sie sind leicht auch nachträglich einzubauen und können mit eventuellen Abdeckungen problemlos so an die Einbausituation angepasst werden, dass sie die Passagiere nicht blenden.

Jede Tür, mit Abschwächung gilt dies auch für sogenannte Taschentüren, deckt im geschlossenen Zustand Teile des Türrahmens ab und gibt diese im geöffneten Zustand, bevorzugt von Beginn der Öffnungsbewegung und bis zum Ende der Schließbewegung, frei. In diesen Bereichen wird erfindungsgemäß das Leuchtmittel angebracht, entsprechend der Erfindug sind dies eine LED-Leiste oder LED-Kette, die praktisch wartungsfrei, langlebig, kostengünstig, mechanisch stabil und mit wenig Energie zu betreiben sind.

Die Erfindung ist im Folgenden, rein schematisch, in der Zeichnung dargestellt, darin zeigt bzw. zeigen
die Fig. 1 eine Seitenansicht eines Schienenfahrzeugs mit einer Schwenkschiebetür entsprechend dem Stand der Technik,
die Fig. 2 eine analoge Ansicht mit einer erfindugsgemäß ausgestatteten Tür,
die Fig. 3 einen Schnitt entlag der Linie III-III der Fig. 2,
die Fig. 4 das Detail IV der Fig. 3,
die Fig. 5 einen Schnitt entlag der Linie V-V der Fig. 2,
die Fig. 6 das Detail VI der Fig. 5 und
die Fig. 7 ein weiteres Detail bei geschlossenen Türblatt.

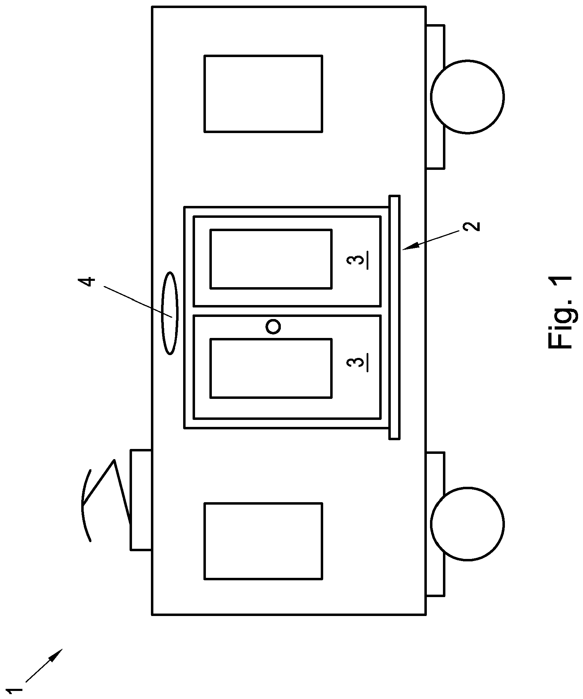

Die Fig. 1 zeigt, in schematischer Skizze, ein Schienenfahrzeug 1 mit einer Tür 2, die Tür 2 weist zwei Türblätter 3 auf, die in geschlossener Stelhing, dargestellt sind. Entsprechend dem Stand der Technik ist, rein schematisch angedentet, einer Leuchte 4 oberhalb des Türrahmens am Fahreug 1 angebracht. Diese Leuchte 4 weist alle oben genannten Nachteile des Standes der Technik auf.

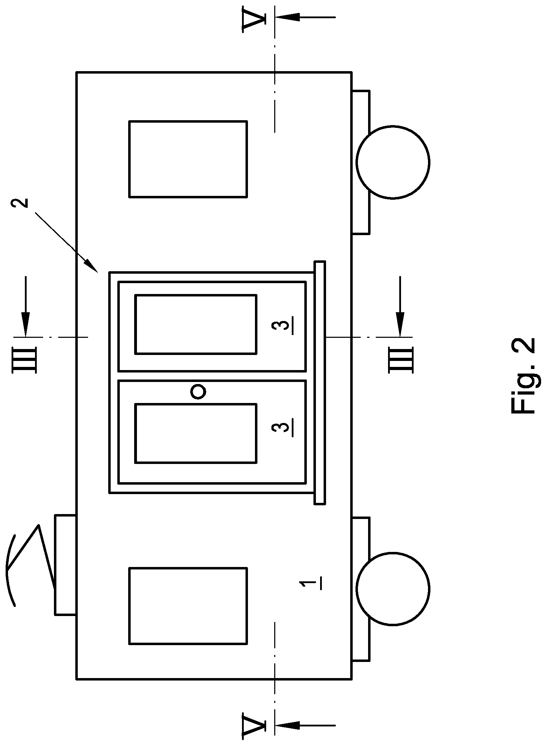

Die Fig 2 ist eine ebenso schematische Darstellung eines erfindungsgemäß ausgestatteten Fahrzeuges 1, wobei zwel Schnittlinien III-III und V-V eingetragen sind, anhand deren Darstellung die Erfindung näher erläutert wird.

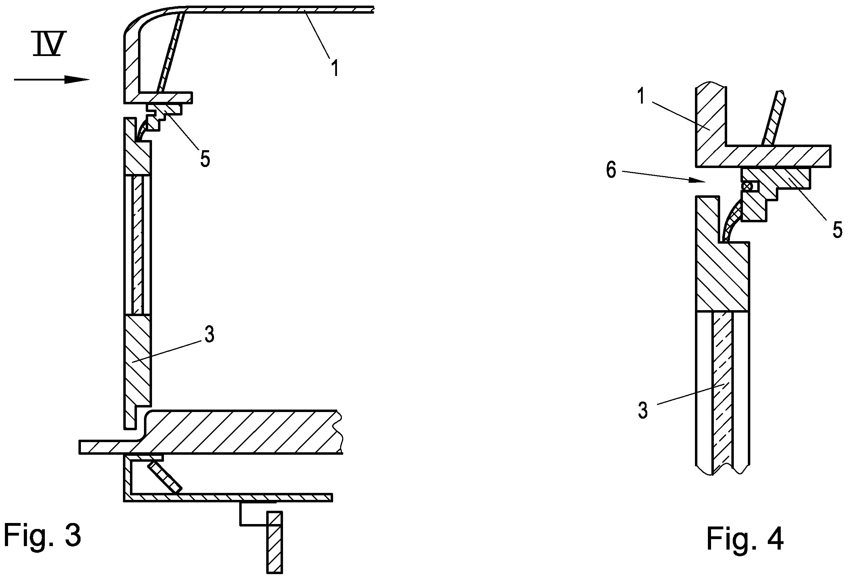

Die Fig. 3 stellt nun, ebenfalls rein schematisch, einen Schnitt entlang der Linie III-III der Fig. 2 dar, Erkennbar ist das Türblatt 3 im Bereich der Außenwand des Fahrzeugs 1, das Teil einer im Stand der Technik in vielen Abwandlungen bekannte Schwenkschiebetür, seltener auch als Dreh- oder Drehklapptür ausgebildet ist, jedenfalls aber mit einem Rahmen 5 zusammenwirkt, der üblicherweise samt dem Türblatt/Türblättern 3 als Einheit in den Wagenkasten des Fahrzeugs 1 eingesetzt wird.

Erfindungsgemäß ist nun zumindest in ausgewählten Abschnitten des Türrahmens 5 eine Beleuchtung 6 vorgesehen, bevorzugt so wie in Fig. 4 dargestellt, in einer Nut eines Profils des Türrahmens 5.

Besonders bevorzugt besteht diese Beleuchnung 6 aus einer LED-Schlene bzw. einer LED-Kette, wie sie im Handel erhältlich ist. Derartige Beleuchtungskörper weisen in einer Linie hintereinander liegende LEDs auf, die über einen zumeist flexiblen, durchgehenden Rückenteil nicht nur mit elektrischem Strom versorgt werden, sondern in diesem Rückenteil auch mechanisch gehalten werden. Der Rückenteil wird mittels Klebstoff oder durch formschlüssige oder kraftschlüssige Fixierung an einem Untergrund oder eben, wie dargestellt, in einer Nut befestigt.

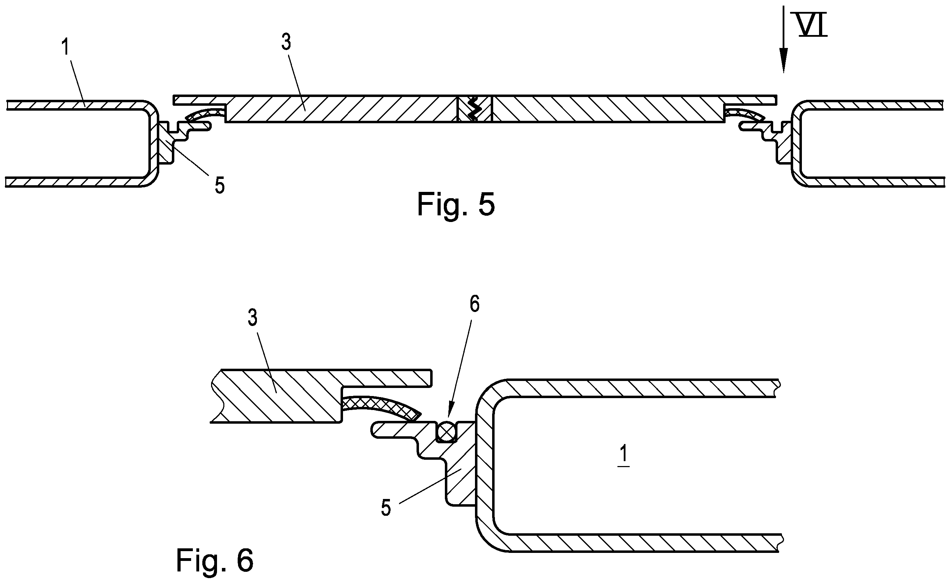

Die Fig. 5 zeigt, rein schematisch, den Schnitt V-V der Fig. 2, auch hier ist ein Detail in Blickrichtung des Pfeiles VI als Fig. 6 herausgezeichnet, man erkennt deutlich, dass auch hier die Unterbringung einer erfindungsgemäßen beleuchtung 6 leicht möglich ist.

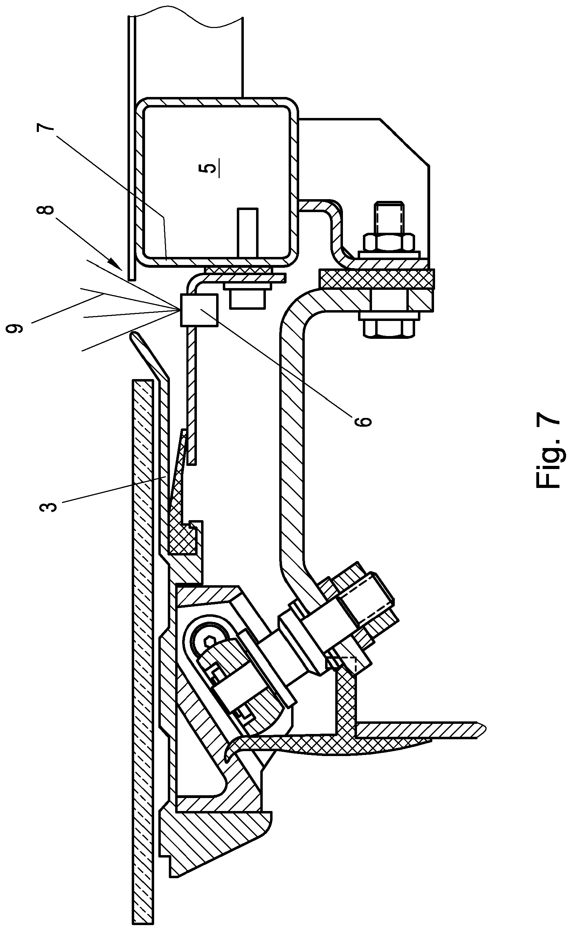

Die Fig. 7, weniger schematisch als die anderen Figs., zeigt, ohne auf die Frage der Ausbildung einer Nut einzugehen, ein Beispiel für den Ort der Anbringung einer LED-Kette 6 am Türrahmen 5, die dabei einerseits geschützt, andererseits auch im geschlossenen Zustand der Tür sichtbar ist. Dargestellt ist der Zustand bei geschlossener Tür, der praktisch stets vorhandene Spalt 8 zwischen Türblatt 3 und Türrahmen 5 ist deutlich zu sehen und durch durchtretende Lichtstrahlen 9 ist die Wirkweise angezeigt. Wenn eine besonders in der Türebene liegende Beleuchtung gewünscht wird, so kann die bzw. eine weitere LED-Kette an der Stelle 7 angeordnet sein. Der Betrieb kann gemeinsam oder auch getrennt erfolgen.

LEDs können auch an anderen Stellen angebracht werden, so im unteren Bereich, womit sie auch auf eventuelle Spalten oder Höhenunterschiede zwischen Wagenkasten und Bahnsteig hinweisen, möglichst ohne zu blenden, daher am besten nur im seitlichen Bereich des Überganges, oder aber auch am Türrahmen 5 so, dass sie eher ins Wageninnere leuchten, oder eben im Wesentlichen in der Türebene strahlen.

Der Betrib der Beleuchtung kann auf vielfältige Weise erfolgen: Als klassische Beleuchtung im Zusammenhang mit der Stellung der Tür, eventuell gekoppelt mit weiteren Randbedingungen, wie der Helligkeit im Außenbereich, oder dem Schaltzustand der Innenbeleuchtung. Eine weitere Möglichkeit besteht darin, die bischer verschiedentlich verwendeten Signallampen für: "Türen Schließen", oder für "Tür Defekt" durch LEDs mit anderen Farben und/oder Blinkzeichen, etc. in die erfindungsgemäße Beleuchtung zu integrieren. Dazu bieten sich besonders die Farben Grün, Rot, Orange und Gelb an. Die Steuerung erfolgt entweder üuber die Türsteuerung oder die Lichtsteuerung, je nach den angestrebten Zielen und Effekten, und ist vom Fachmann auf dem Gebiete der Türtechnik für Fahrzeuge, insbesonders Schienenfahrzeuge, in Kenntnis der Erfindung leicht zu konzipieren.

**Bezugszeichenliste:**

| | | | |
|---|---|---|---|
| 01 | Fahrzeug | 06 | Beleuchtung, Leuchtmittel |
| 02 | Tür | 07 | Alternative Stelle |
| 03 | Türflügel | 08 | Spalt |
| 04 | Leuchte | 09 | Lichtstrahlen |
| 05 | Türrahmen | | |

## Patentansprüche

1. Schwenkschiebetür eines Schienenfahrzeugs, mit einem Türrahmen (5) bzw. Portalrahmen, mit zumindest einem Türblatt (3) und mit zumindest einem Leuchtmittel (4) im Türbereich, **dadurch gekennzeichnet, dass** das Leuchtmittel (4) eine LED-Leiste oder LED-Kette (6) ist, die in einer Nut des Türrahmens (5) bzw. Portalrahmens an einer Stelle angeordnet ist, die im geschlossenen Zustand der Tür vom Türblatt (3) zumindest im Wesentlichen abgedeckt ist.

2. Schwenkschiebetür nach Anspruch 1, **dadurch gekennzeichnet, dass** mehrere Leuchtmittel (4) mit unterschiedlicher Farbe vorgesehen sind.

3. Schwenkschiebetür nach Anspruch 1 oder 2, **dadurch gekennzeichnet, dass** das Leuchtmittel (4) über die Türsteuerung und/oder die Lichtsteuerung des Fahrzeuges aktiviert wird.

## Claims

1. Sliding plug door for a rail vehicle, having a door frame (5) or a portal frame, at least one door leaf (3) and at least one lighting means (4) in the door region, **characterised in that** the lighting means (4) is an LED strip or an LED chain (6) located in a groove of the door frame (5) or portal frame at a point which is at least substantially covered by the door leaf (3) in the closed state of the door.

2. Sliding plug door according to claim 1, **characterised in that** several lighting means (4) of different colours are provided.

3. Sliding plug door according to claim 1 or 2, **characterised in that** the lighting means (4) is activated via the door controller and/or the light controller of the vehicle.

## Revendications

1. Porte louvoyante - coulissante d'un véhicule ferroviaire, comprenant un cadre (5) de porte ou un cadre de portique, comprenant au moins
un ventail (3) de porte et comprenant au moins un moyen (4) d'éclairage dans la partie de porte, **caractérisée en ce que** le moyen (4) d'éclairage est une réglette LED ou une guirlande LED (6), qui est disposée dans une rainure du cadre (5) de porte ou du cadre de portique en un endroit qui, lorsque la porte est à l'état fermé, est recouvert au moins sensiblement par le ventail (3) de la porte.

2. Porte louvoyante - coulissante suivant la revendication 1, **caractérisée en ce qu'**il est prévu plusieurs moyens (4) d'éclairage de couleurs différentes.

3. Porte louvoyante - coulissante suivant la revendication 1 ou 2, **caractérisée en ce que** le moyen (4) d'éclairage est activé par la commande de porte et/ou la commande de lumière du véhicule.
